(19) Europäisches Patentamt
European Patent Office
Office européen des brevets

(11) EP 4 520 772 A1

(12) **EUROPEAN PATENT APPLICATION**

(43) Date of publication:
**12.03.2025 Bulletin 2025/11**

(21) Application number: **24198358.4**

(22) Date of filing: **04.09.2024**

(51) International Patent Classification (IPC):
***C08F 297/04*** *(2006.01)* ***C08F 8/44*** *(2006.01)*
***C09D 153/02*** *(2006.01)* ***C08L 53/02*** *(2006.01)*
***H01M 4/36*** *(2006.01)* ***H01M 10/052*** *(2010.01)*
***H01M 10/0565*** *(2010.01)* *C08F 212/12 (2006.01)*
*C08F 212/14 (2006.01)* *C08F 12/30 (2006.01)*

(52) Cooperative Patent Classification (CPC):
(C-Sets available)
**C08F 297/04; C08F 8/44; C08L 53/025; C09D 153/025; H01M 4/36; H01M 10/052; H01M 10/0565;** C08F 212/12; C08F 212/30
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.09.2023 US 202363580453 P**

(71) Applicant: **Notark Corporation**
**Houston, TX 77084 (US)**

(72) Inventors:
- **Mhetar, Vijay**
  **Houston, Texas 77084 (US)**
- **Tocchetto, Roger**
  **Houston, Texas 77084 (US)**
- **Yan, Jiaqi**
  **Houston, Texas 77084 (US)**

(74) Representative: **Henkel & Partner mbB**
**Patentanwaltskanzlei, Rechtsanwaltskanzlei**
**Maximiliansplatz 21**
**80333 München (DE)**

(54) **SULFONATED STYRENIC BLOCK COPOLYMER SEPARATOR AND ENERGY STORAGE DEVICE**

(57) The disclosure relates to a functionalized styrenic block copolymers (SSBC) in the form of a lithiated-sulfonated hydrogenated styrenic block copolymer ($SO_3$Li-SBC). The composition is obtained by sulfonation of SBC precursor followed by neutralization of the ionic block of the sulfonated block copolymer (SSBC) by $Li^+$ ion, modifying characteristics for use as a separator in energy storage device. The separator has high ionic conductivity, a high dimensional stability/low thermal contraction and good mechanical stability, more particularly a high elongation at break.

EP 4 520 772 A1

(52) Cooperative Patent Classification (CPC): (Cont.)

C-Sets
**C08F 8/44, C08F 297/04**

## Description

### FIELD

The disclosure relates to a lithiated-sulfonated styrenic block copolymer composition, methods of preparation, and applications thereof.

### BACKGROUND

Lithium-ion batteries have made great progress for use in portable electronics, electric vehicles, and other large-scale energy storage areas. The separator is an indispensable component in lithium-ion batteries and directly affects the electrochemical performance and, especially, safety. It is a key safety element for preventing short circuits in the batteries. It is imperative to have safe separators for rechargeable batteries.

Separators are porous elements, customarily in the form of films, for separating the chemical reactions at anode and cathode in a battery. Separators can be applied as a coating directly to the anode and/or cathode. Self-supporting separators are not applied as a coating to one of the electrodes, but instead constitute an independent component of batteries.

Traditional separators decompose chemically in alkaline electrolytes, which limits the useful life of batteries. Furthermore, some traditional separators exhibit low mechanical strength and poor resistance to penetration due to dendrite growth.

There is a need for improved material to solve some of the problems caused by the traditional separator. A new styrenic block copolymer-based separator material with improved properties has been developed.

### SUMMARY

One aspect of the disclosure is related to a sulfonated styrenic block copolymer having a general configuration selected from the group consisting of: A-C-B-A, A-C-B-C-A, A-B-C-B-A, $(A\text{-}C\text{-}B)_nA$, $(A\text{-}B\text{-}C)_nA$, $(A\text{-}C\text{-}B)_nX$, $(A\text{-}B\text{-}C)_nX$ and mixtures thereof, wherein $n \geq 2$ , and X is a residue of a coupling agent. Each block A is a poly(para-alkylstyrene) block having a molecular weight from 1-60 kg/mol, each block B is a hydrogenated polyisoprene block (E/P) or a hydrogenated polybutadiene block (E/B), each block B has a molecular weight of 1-10 kg/mol, and each block C is a sulfonated polystyrene block, or a polymer block consisting essentially of sulfonated styrene units and unsubstituted styrene units according to formula (I):

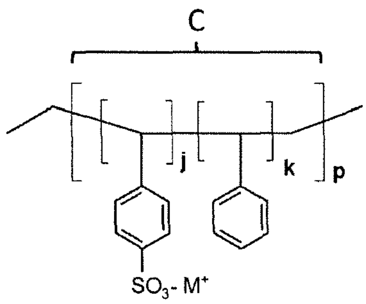

(I)

wherein p is $\geq 1$, $j \geq 1$ and k >_ 0, and $M^+$ is selected from the group consisting of: $H^+$, $Na^+$, $K^+$, $Li^+$, $Cs^+$, $Ag^+$, $Hg^+$ and $Cu^+$. Each block C has a molecular weight of 30 - 80 kg/mol. The sulfonated styrenic block copolymer has a total molecular weight of 65 - 115 kg/mol, an ion exchange capacity of 0.5 - 3.5 meq/g, and a glass transition temperature ($T_g$) of 90 - 200°C, measured according to ASTM 4065.

The second aspect is related to a sulfonated styrenic block copolymer which is a pentablock having a configuration of A-B-C-B-A represented by a structure according to formula (II):

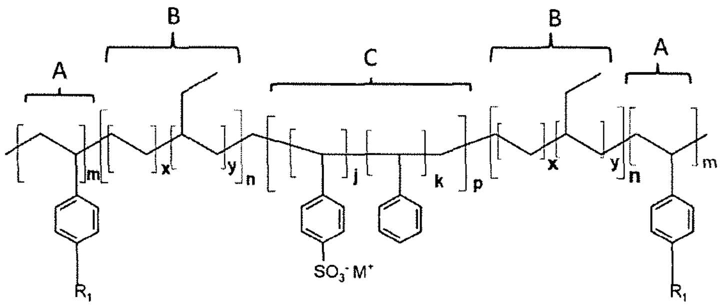

(II)

wherein each x, y, m, n, and p independently, is ≥ 1; j ≥ 1 and k ≥ 0, and $M^+$ is $H^+$. Each block A is an end block comprising polymerized para-methyl styrene monomer, wherein $R_1$ is $CH_3$. Each block B consists of ethylene and butylene or ethylene and propylene units, and each block C consists of sulfonated styrene units and unsubstituted styrene units.

The third aspect related to a film comprising the sulfonated styrenic block copolymer, which is characterized as having at least a tensile stress of 6 - 20 MPa, a toughness of 3 - 25 $MJ/m^3$, a Young's modulus in dry state of 190 - 1100 MPa; all above measurements according to ASTM D412, a DMA Modulus at 80°C of 150 - 850 MPa, according to ASTM 4065 and a water vapor transmission rate (WVTR) in an upright manner of 5-20 $Kg/m^2$/day (50 °C/10% relative humidity).

The fourth aspect is related to a lithiated sulfonated styrenic block copolymer, which is formed by neutralizing the sulfonated styrenic block copolymer with 2-35 mol% of an aqueous solution of lithium hydroxide, wherein a membrane formed from the lithiated sulfonated styrenic block copolymer has an ionic conductivity at 30 °C of > $10^{-3}$ S $cm^{-1}$ as measured by electrochemical impedance spectroscopy (EIS), and an electrolyte uptake at 60 °C of > 25 % as measured by a weight gain measurement method.

## DESCRIPTION

The following terms will have the following meanings:

"Consisting essentially of" means that the claimed composition primarily contains the specified materials, with allowances for additional components that do not materially affect novel characteristics or function of the claimed invention, with the additional components, if present, in an amount of < 30%, or < 20%, or < 10%.

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other combinations of A, B, and C.

A list of embodiments presented as "A, B, or C" is to be interpreted as including the embodiments, A only, B only, C only, "A or B," "A or C," "B or C," or "A, B, or C."

"Any of A, B, or C" refers to one option from A, B, or C, e.g., A only, B only, or C only.

"Any of A, B, and C" refers to one or more options from A, B, and C, e.g., A only, B only, C only, A and B, A and C, A and B and C, etc.

"Block" as used herein refers to a section of a polymer molecule that comprises a plurality of identical constitutional units (monomers) and possesses at least one constitutional or configurative feature that does not appear in the immediately adjacent sections (blocks). For example, a block copolymer having three blocks encompasses linear and branched polymers having the general construction $(A)_m$ $(B)_n$ $(C)_o$, in which A, B and C represent the different monomers, and m, n, and o represent the number of repeating units in the individual blocks. $(A)_m$ and $(C)_o$ are identified in this case as end (terminal) blocks and may have the same or a different monomer composition and / or molar mass (indicated as the number of monomer units m and o). $(B)_n$ is termed the middle block and differs in monomer composition from the end blocks $(A)_m$ and $(C)_o$. Each of the blocks $(A)_m$, $(B)_n$, and $(C)_o$ may in turn consist of one or more homopolymers, random or block copolymers. The middle block may in turn consist of a plurality of blocks, producing block copolymers having more than 3 blocks, e.g., pentablock copolymers. Star-shaped block copolymers are a special form of branched block copolymers, where three or more chains of the general formula $[(A)_m (B)_n]_p$ branching out radially from a center (C), with $(A)_m$ and $(B)_n$ as defined above, and p representing the number of chains, with each individual chain being identical or different. These too may be used as block copolymers in the present disclosure. Structures of block copolymers can be identified by GPC and proton nuclear magnetic resonance ("HNMR").

"Conjugated diene" refers to an organic compound containing conjugated carbon-carbon double bonds and a total of 4 to 12 carbon atoms, such as 4 to 8 carbon atoms, which can be any of 1,3-butadiene and substituted butadienes, including but not limited to 1,3 cyclohexadiene, isoprene, 2,3-dimethyl-1 ,3-butadiene, 1-phenyl-1,3-butadiene, 1,3-pentadiene, 3-butyl-1,3-octadiene, chioroprene, and piperylene, or any combination thereof. In embodiments, the conjugated diene block comprises a mixture of butadiene and isoprene monomers. In embodiments, 1,3-butadiene

alone is used.

"Monovinyl arene," or "monoalkenyl arene," or "vinyl aromatic" refers to an organic compound containing a single carbon-carbon double bond, at least one aromatic moiety, and a total of 8 to 18 carbon atoms, such as 8 to 12 carbon atoms. Examples include any of styrene, o-methyl styrene, p-methyl styrene, p-tertbutyl styrene, 2,4-dimethyl styrene, alpha-methyl styrene, vinylnaphthalene, vinyltoluene, vinylxylene, or mixtures hereof. In embodiments, the monoalkenyl arene block comprises a substantially pure monoalkenyl arene monomer. In some embodiment, styrene is the major component with minor proportions (less than 10 wt. %) of structurally related vinyl aromatic monomers such as o-methylstyrene, p-methyl styrene, p-tert-butyl styrene, 2,4- dimethyl styrene, a-methylstyrene, vinylnaphtalene, vinyltoluene, vinylxylene or combinations thereof. In embodiments, styrene alone is used.

"Vinyl content" refers to the content of a conjugated diene that is polymerized via 1,2-addition in the case of butadiene, or via 3,4-addition in case of isoprene, resulting in a monosubstituted olefin, or vinyl group, adjacent to the polymer backbone. Vinyl content can be measured by HNMR.

"Polystyrene content" or PSC of a block copolymer refers to the % weight of vinyl aromatic, e.g., polystyrene in the block copolymer, calculated by dividing the sum of molecular weight of all vinyl aromatic blocks by the total molecular weight of the block copolymer. PSC can be determined using any suitable methodology such as HNMR.

"E/B" denotes a polymer block made of ethylene and butylene units in a random order, resulting from hydrogenation of the polymerized butadiene units, which are formed when 1,3-butadiene polymerizes by 1,2- and 1,4-addition mechanisms.

"E/P" denotes a polymer block made of ethylene and propylene units in a random order, resulting from hydrogenation of the polymerized isoprene units, which are formed when isoprene polymerizes by 1,2- and 1,4-addition mechanisms.

"Coupling efficiency", expressed as % CE, is calculated using the values of the wt. % of the coupled polymer and the wt. % of the uncoupled polymer. The wt. % of the coupled polymer and the uncoupled polymer are determined using the output of the differential refractometer detector. The intensity of the signal at a specific elution volume is proportional to the amount of material of the molecular weight corresponding to a polystyrene standard detected at that elution volume.

"Coupling Agent" or "X" refers to the coupling agents commonly used in making styrenic block copolymers SBC art. e.g., silane coupling agents such as isobutyl-trimethoxy silane, methyltrimethoxisilane; polyvinyl compounds, polyvinyl arene, di- or multivinylarene compounds; di- or multiepoxides; di- or multiisocyanates; di- or multialkoxysilanes; di- or multiimines; di-or multialdehydes; di- or multiketones; alkoxytin compounds; di- or multihalides, such as silicon halides and halosilanes; mono-, di-, or multianhydrides; di- or multiesters; tin tetrachloride; tetramethyl orthosilicate.

"Molecular weight" or $M_w$ refers to the styrene equivalent molecular weight in kg/mol of a polymer block or a block copolymer. $M_w$ can be measured with gel permeation chromatography (GPC) using polystyrene calibration standards, such as is done according to ASTM 5296-19. GPC detector can be an ultraviolet or refractive index detector or a combination thereof. The chromatograph is calibrated using commercially available polystyrene molecular weight standards. $M_w$ of polymers measured using GPC so calibrated are styrene equivalent molecular weights or apparent molecular weights. $M_w$ expressed herein is measured at the peak of the GPC trace-and is commonly referred to as styrene equivalent "peak molecular weights," designated as $M_p$.

"Electrochemical cell," refers to a "rechargeable battery," or a "battery cell," and includes a positive electrode, a negative electrode, and an electrolyte there between and in direct contact therewith which conducts ions (e.g., $Na^+$, $Mg^{2+}$, $Li^+$, $K^+$) but electrically insulates the positive and negative electrodes. In embodiments, a rechargeable battery may include multiple positive electrodes and/or multiple negative electrodes in one container.

"Membrane" refers to a continuous, pliable sheet or layer of a material (film or coating etc.), which can function as a selective barrier allowing something, e.g., molecules, ions, gases, or particles, etc., to pass through but stops others.

"Ion Exchange Capacity" or IEC refers to the total active sites or functional groups responsible for ion exchange in a polymer. An acid-base titration method can be used to determine the IEC, see International Journal of Hydrogen Energy, Volume 39, Issue 10, March 26, 2014, Pages 5054-5062, "Determination of the ion exchange capacity of anion-selective membrane." IEC is the inverse of "equivalent weight" or EW, which is the weight of the polymer required to provide 1 mole of exchangeable protons.

"Battery" refers to an energy storage system, or energy device, and "Li-ion battery" as used herein also includes battery based on materials other than lithium, such as sodium, potassium, etc., for use in energy storage system.

"Susceptible to sulfonation" refers to a polymer, polymer block, compound, monomer, oligomer, etc., being predisposed, or sensitive, or capable of reaction with sulfur containing compound, e.g., $SO_3$, $H_2SO_4$, etc., under conditions conventionally employed for sulfonation, wherein sulfonation is very likely to occur to obtain a sulfonated product. In embodiments, a polymer block "susceptible to sulfonation" upon sulfonation, the degree of sulfonation is > 10 mol%, or > 20 mol%, or > 30, or > 50 mol%, or > 75 mol%, of the total polymer block, for the polymer block to have > 10 mol%, or > 20 mol%, or > 30 mol% , or > 50 mol%, or > 75 mol% sulfonic acid or sulfonate ester functional groups.

"Resistant to sulfonation" means having little if any sulfonation of the respective block under conditions conventionally employed for sulfonation, with < 10 mol%, or < 8 mol%, or < 5 mol% sulfonic acid or sulfonate ester

functional groups in the block.

"Dry" or "dry state" refers to or describes the state of hydration of the material or membrane which has absorbed essentially none, or insignificant amounts of water. For example, a material or membrane which is merely in contact with the atmosphere is considered to be in the dry state.

"Water" refers to deionized water, tap water, distilled water, processed water, natural water, spring water, mineral water, sparkling water, hard water, or mixtures thereof.

The disclosure relates to a separator for energy storage devices comprising, consisting essentially of, or consisting of a functionalized styrenic block copolymer in the form of a lithiated-sulfonated hydrogenated styrenic block copolymer (Li-SSBC). The copolymer is obtained by a sulfonation of an SBC precursor to obtain a sulfonated styrenic block copolymer (SSBC), followed by neutralization of the ionic block of the SSBC by $Li^+$ ions, modifying its characteristics for use as a separator in energy storage devices.

Styrenic Block Copolymer (SBC) Precursor: The separator comprises a functionalized styrenic block copolymer, which is obtained from an SBC precursor. The SBC precursor is any of a linear, a branched, and a radial block copolymer having at least one end block A and at least one interior block B and C.

The sulfonated styrenic block copolymer (SBC) has any of: a triblock, a tetrablock, a pentablock, and a coupled structure. The SBC precursor consists essentially of polymer blocks A, B and C and has a general configuration of: A-C-B-A, A-C-B-C-A, A-B-C-B-A, $(A\text{-}C\text{-}B)_nA$, $(A\text{-}B\text{-}C)_nA$, $(A\text{-}C\text{-}B)_nX$, $(A\text{-}B\text{-}C)_nX$ and mixtures thereof, wherein $n \geq 2$, and X is a coupling agent residue. The blocks A, B and C are defined in the following paragraphs.

Each block A is derived from para-substituted vinyl aromatic monomer where the para-substituted group is a $C_1$ - $C_{12}$ linear or branched alkyl group. In embodiments, the A block is a para-substituted styrene monomer selected from para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene and mixtures of the above monomers. Examples of para-substituted styrene monomers include para-t-butylstyrene and para-methylstyrene, with para-t-butylstyrene being most preferred. Monomers can be mixtures of monomers, depending on the particular source. The A block has relatively higher glass transition temperature, for example, greater than 50 °C, as compared to the other polymer blocks in the SBC, which can lead to copolymers having desirable mechanical and other functional properties, including morphology, which makes them suitable for use as dielectric materials. In embodiments, the block A has a peak molecular weight from 1 - 60 kg/mol; or 2-50 kg/mol; or 5- 40 kg/mol, or 8 - 25 kg/mol.

In embodiments, block A constitutes from 30-80 wt. % or 35-75 wt.% or 40-70 wt.%, or 45-65 wt.% based on the total weight of the SBC precursor.

The block B comprises a hydrogenated polymer or copolymer of a conjugated diene derived from any of isoprene, butadiene, and mixtures thereof. After hydrogenation, each isoprene unit, if present, is converted into ethylene-propylene (EP) block, and each butadiene unit, if present, is converted to ethylene-butylene (EB) block. In embodiments, the B block has a peak molecular weight of 1- 25 kg/mol, 1-20 kg/mol, or 1-10 kg/mol, 1-9 kg/mol, or 5-8 kg/mol, or > 1 kg/mol, or < 25 kg/mol, or < 22 kg/mol, or <18 kg/mol, or <15 kg/mol, or <12 kg/mol, or < 10 kg/mol, or > 2 kg/mol.

In embodiments, the block B is sufficiently hydrogenated for the precursor SBC, and the subsequent SSBC (after sulfonation) to have a conjugated diene block of ≤ 0.15 meq/g, or < 0.10 meq/g, or < 0.05 meq/g, or < 0.03 meq/g, or > 0.0001 meq/g. The hydrogenation level in the final SSBC product, as well as hydrogenated diene polymers can be determined UV-VIS spectrophotometry and / or 1HNMR.

In embodiments, the polymer block B has a vinyl content, prior to hydrogenation, from 8-85 wt.%, or >15 wt. %, or < 50 wt. %, or 20-75 wt. %, or 30-50 wt. %, based on the total weight of the polymerized conjugated diene in block B. Vinyl content can be measured before or after hydrogenation, via 1HNMR.

In embodiments, the block B constitutes from ≤ 25, or 5 - 25, or 10 - 25, or 15 - 25, or 5 - 20, or 5 - 15, 5 - 20 wt.%, based on the total weight of the SBC precursor.

In embodiments, block C comprises segments of one or more polymerized vinyl aromatic monomers selected from unsubstituted styrene monomers. Block C is susceptible to sulfonation and constitutes from 40-60 wt. %, or 45-55 wt.%, or 40-50 wt.%, based on the total weight of the SBC precursor.

In embodiments, the block C has a number average molecular weight of 30-80, kg/mol or 35-60 kg/mol, or 40-60 kg/mol, or 40-50 kg/mol.

Sulfonated Styrenic Block Copolymer (SSBC): The SSBC is obtained by sulfonation of the styrenic block copolymer (SBC) precursor described above. The SSBC has at least a sulfonate group, e.g., $-SO_3$, either in an acid form (e.g., $-SO_3H$, sulfonic acid) or a salt form (e.g., $-SO_3Na$). In embodiments, the sulfonate group is in the form of a metal salt, ammonium salt, or amine salt.

In embodiments, the SSBC is characterized as being sufficiently sulfonated, meaning having > 10 mol% of sulfonic acid or sulfonate ester functional groups based on total mol of the number of monomer units or polymer blocks to be sulfonated ("degree of sulfonation"). In embodiments, the SSBC has a degree of sulfonation of 1 - 100 mol %, or at least 10 mol%, > 15, or > 20, or > 25, or > 30, or > 40, or > 50, or > 60, or > 70, or > 80, or > 90, or > 99 mol%. The degree of sulfonation can be measured by NMR.

In embodiments, the sulfonated styrenic block copolymer (SSBC) has any of: triblock, tetrablock, pentablock, and coupled structure. The SSBC has a general configuration of: A-C-B-A, A-C-B-C-A, A-B-C-B-A, $(A\text{-}C\text{-}B)_nA$, $(A\text{-}B\text{-}C)_nA$, $(A\text{-}C\text{-}B)_nX$, $(A\text{-}B\text{-}C)_nX$ and mixtures thereof, wherein $n \geq 2$, and X is a coupling agent residue. At least one block is susceptible to sulfonation or other functionalization that introduces an acid group for improved hydrophilicity. In embodiments, blocks A and B are resistant to sulfonation; and block C is susceptible to sulfonation. In embodiments, each block A is a poly(para-alkyl styrene) block and each block B is a hydrogenated polyisoprene block (E/P) or a hydrogenated polybutadiene block (E/B). In embodiments, each block C is a sulfonated polystyrene block, or a polymer block consisting essentially of sulfonated styrene units and unsubstituted styrene units according to formula (I):

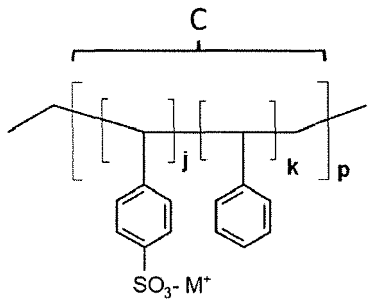

(I)

wherein p is $\geq 1$, $j \geq 1$ and $k \geq 0$, and $M^+$ is selected from the group consisting of: $H^+$, $Na^+$, $K^+$, $Li^+$, $Cs^+$, $Ag^+$, $Hg^+$, and $Cu^+$.

As used herein, sulfonated styrenic block copolymer SSBC refers to block copolymers with $M = H^+$, as well as sulfonated styrenic block copolymers that is further neutralized (metalated) by reacting a sulfonated styrenic block copolymer (having $M=H^+$) with an ionizable metal compound to obtain a metal salt, i.e., $Na^+$, $K^+$, $Li^+$, $Cs^+$, $Ag^+$, $Hg^+$ , and $Cu^+$.

In embodiments, each block A is a poly(para-alkyl styrene), wherein the poly(para-substituted alkyl styrene) is derived from a para-alkyl styrene monomer selected from the group consisting of: para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene, and mixtures thereof.

In embodiments, block B is a hydrogenated polybutadiene block, wherein prior to hydrogenation, the polybutadiene block is derived from a conjugated diene monomer selected from the group consisting of: butadiene, 2,3-dimethyl-1,3-butadiene, 1-phenyl-1,3-butadiene, 1,3-pentadiene, 1,3-hexadiene, 3-butyl-1,3-octadiene, and mixtures thereof.

In embodiments, SSBC is a pentablock having a configuration of A-B-C-B-A represented by a structure according to formula (II):

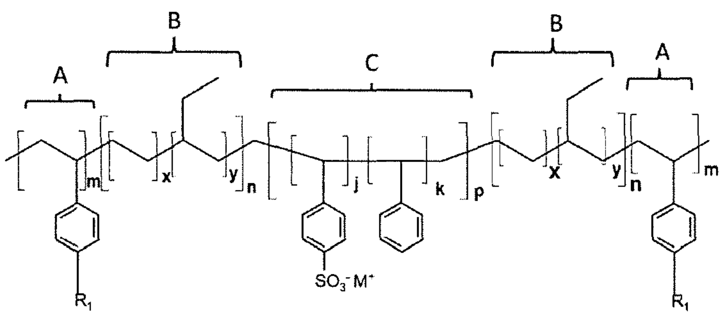

(II)

wherein each x, y, m, n, and p, independently, is $\geq 1$, j >_ 1 and $k \geq 0$, $M^+$ is $H^+$. Each block A is an end block comprising polymerized para-methyl styrene monomer, wherein $R_1$ is $CH_3$. Each block B consists of ethylene and butylene or ethylene and propylene units, and each block C consists of sulfonated styrene units and unsubstituted styrene units.

In embodiments, the SSBC has a peak molecular weight of 20-250 kg/mol, or 25-225 kg/mol, or 30-200 kg/mol, 45-175 kg/mol, or 55-150 kg/mol, or 65-120 kg/mol, or >20 kg/mol, or < 250 kg/mol.

In embodiments, the SSBC has block B content of < 30%, or < 28%, or < 24%, or < 20%, or < 15%, or > 3%, or 5-20 % based on the total weight of the pentablock copolymer.

In embodiments, block C is susceptible to sulfonation and constitutes from 40-65 wt. %, or 45-55 wt.%, or 40-50 wt.%, based on the total weight of the pentablock copolymer.

In embodiments, the weight ratio of block A to block B is from 10:1 to 1:2, or 5:1 to 1:2, or 4:1 to 3:1, or 2:1 to 1:1.

In embodiments, the ratio of sulfonated styrene units and unsubstituted styrene units in block C is 99:1 to 1:99 mol%, or 99.5: 0.5 to 0.5: 99.5, or 98:2 to 2:98 mol%, or 95:5 to 5:95 mol%, or 92:8 to 8:92 mol%, or 90:10 to 10:90 mol%.

In embodiments, the SSBC has a coupled structure with a configuration of $(A\text{-}C\text{-}B)_2X$, $(A\text{-}B\text{-}C)_2X$, having a coupling efficiency of 50 - 85 %, or 55 - 80 %, or > 50 %, or < 85%.

It should be noted that instead of sulfonating SBC precursor as described herein to obtain the SSBC, other sulfonate groups containing polymers can be used. Examples include perfluorosulfonic acid polymers (e.g., sulfonated tetrafluoroethylene), sulfonated polyolefins, sulfonated polyimides, sulfonated polyamides, sulfonated polyesters, polystyrene sulfonates, sulfonated styrenic block copolymers, sulfonated polysulfones such as polyether sulfone, sulfonated polyketones such as polyether ether ketone, sulfonated polyphenylene ethers, and mixtures thereof.

<u>Neutralization of Sulfonated Styrenic Block Copolymer:</u> In embodiments, the sulfonic acid functional group in the C block of the SSBC is "neutralized" by reacting the sulfonated styrenic block copolymer with an ionizable metal compound to obtain a metal salt.

In embodiments, suitable metal ions to form the neutralized SSBC are positive valent ions of metals, preferably mono-, di- and trivalent ions of metals in Groups IA, IB, IIA, IIB, IIIA, IIIB, and VIII, of the IUPAC Periodic Table. These metal ions can be complex or un-complexed and can be used alone or in any mixture thereof. Suitable monovalent metal ions are $Na^+$, $K^+$, $Li^+$, $Cs^+$, $Ag^+$, $Hg^+$ and $Cu^+$. Suitable divalent metal ions are $Mg^{2+}$, $Ca^{2+}$, $Sr^{2+}$, $Ba^{2+}$, $Cu^{2+}$, $Cd^{2+}$, $Sn^{2+}$, $Pb^{2+}$, $Fe^{2+}$, $Co^{2+}$, $Ni^{2+}$, and $Zn^{2+}$. Suitable trivalent metal ions are $Al^{3+}$, $Sc^{3+}$, $Fe^{3+}$, $La^{3+}$, and $Y^{3+}$. Preferable compounds are hydroxides, oxides, alcoholates, carboxylates, formates, acetates, methoxides, ethoxides, nitrates, carbonates, and bicarbonates of the above-referenced metal ions. In embodiments, the $Li^+$ is interchangeably used as $Na^+$.

In embodiments, the neutralization reaction is carried out either by: (i) adding the metal compound, directly or in solvent to a solution of the functionalized block copolymer followed by neutralization, precipitation, and separation of the resulting polymer, or (ii) by melt blending the functionalized block copolymer with a metal compound. The melt blending is preferably conducted at elevated temperature to facilitate homogeneous distribution of the metal compound, and to volatize the neutralization product.

The degree of functionalization and neutralization can be measured via known techniques, e.g., infrared analysis or elemental analysis to determine the overall degree of functionality, and titration with a strong base to determine the degree of functionality and / or the degree of neutralization (metal salt content).

In embodiments, the SSBC is neutralized with a concentrated aqueous solution of lithium hydroxide in the range from 2-35 mol%, or > 2 mol%, or > 5 mol%, or > 10 mol%, or > 15 mol%, or > 20 mol%, or < 35 mol%.

In embodiments, the SSBC (pentablock) is neutralized with lithium hydroxide to form a neutralized SSBC (Li-SSBC) of formula (III),

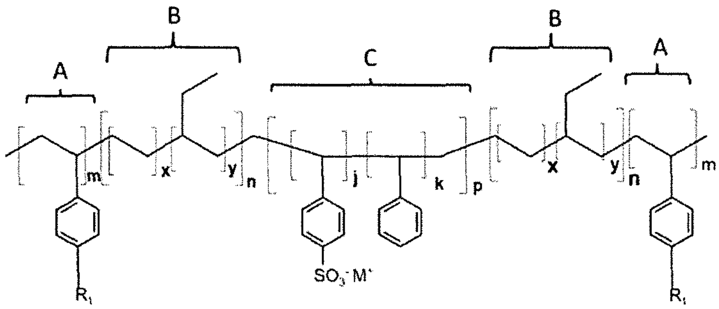
(III)

$R_1$ is $CH_3$; x, y, m, n, and p $\geq 1$; j $\geq 1$ and k $\geq 0$, and $M^+$ is $Li^+$

In embodiments the number of groups constituting "j" in block C is in the range of 30-100 mol.% (of block C), and with the remainder being the group constituting "k". Block A is a poly(para-methyl styrene) block, block B is a hydrogenated polyisoprene block (E/P) or a hydrogenated polybutadiene block (E/B), and block C is a lithiated-sulfonated polystyrene block, or a polymer block consisting essentially of lithiated-sulfonated styrene units, and styrene units.

In embodiments, the degree of lithiation-sulfonation ($LiSO_3$) in neutralized lithiated sulfonated hydrogenated styrenic block copolymer (Li-SSBC) ranges from 30-100 mol%, or >25 mol%, or > 30 mol%, or > 35 mol %, or > 45 mol %, or > 60 mol%, or > 75 mol %, or > 85 mol %, or > 95 mol %.

<u>Cross-linking Agent</u>: The cross-linking agent is a reactive compound, e.g., a monomer, oligomer, or polymer, selected from the group consisting of acrylates, compounds having at least two vinyl groups, isocyanurates, polyisocyanates (aliphatic and / or aromatic), di-isocyanates, polyester diols (aliphatic and / or aromatic), silanes such as alkoxy or vinyl silanes, siloxanes, polyether modified siloxanes, thiols, compounds having two or more isopropenyl groups, anhydrides, and mixtures thereof.

In embodiments, the cross-linking agents are selected from polymers / oligomers containing at least two vinyl groups. Such cross-linking agents include styrene-butadiene copolymers, polybutadienes, styrene-butadiene-divinylbenzene copolymers, and the like. Oligomers have at least two vinyl groups and formed from monomers, such as, for example, styrene, α-methylstyrene, vinyltoluene, p-methylstyrene, ethylvinylbenzene, vinylnaphthalene, and mixtures thereof.

In embodiments, the cross-linking agent is an aliphatic polyisocyanate or an aliphatic polyester diol.

In embodiments, the cross-linking agent is present in amounts of 0.1 - 15, or 0.5 - 12, or 1 - 10, or 2 - 8, 0.5 - 5 wt.%, based on total weight of the copolymer.

Optional Additives: In embodiments where the Li-SSBC is used as a separator, the composition further comprises an additive selected from the group consisting of activators, curing agents, crosslinking agents (different from diamine based), stabilizers, neutralizing agents, thickeners, coalescing agents, slip agents, release agents, antiozonants, color change pH indicators, tackifiers, film forming additives, dyes, pigments, UV stabilizers, UV absorbers, fillers, other resins, redox couples, flame retardants, viscosity modifiers, wetting agents, deaerators, toughening agents, colorants, heat stabilizers, light stabilizers, lubricants, flow modifiers, drip retardants, antiblocking agents, antistatic agents, processing aids, stress-relief additives, binding agents, and mixtures thereof.

In embodiments, the composition further comprises polymers other than a alkyl halide substituted SBC.

In embodiments, the composition further comprises at least a plasticizer, a high-dielectric constant solvent, or a liquid electrolyte to facilitate an increase in ionic conductivity. Examples of plasticizers include bis(2-ethylhexyl) phthalate (BEHP), dibutyl phthalate (DBP), diisobutylphthalate (DIBP), or mixtures thereof. In embodiments, the liquid electrolyte is selected from propylene carbonate (PC), ethylene carbonate (EC), diethyl carbonate (DEC), dimethyl carbonate (DMC), ethyl methyl carbonate (EMC), or mixtures thereof. In embodiments, a liquid electrolyte is formed by dissolving an electrolyte (i.e., lithium salt) such as LiPF6, LiBF4, LiClO4, LiTFSI in the high-dielectric constant solvent before adding to the lithiated sulfonated block copolymer.

In embodiments, additive is used in amounts of up to 10 wt.%, or 0.1 - 10 wt.%, or 0.5 - 5 wt.%, or 1 - 10 wt.%, or 1 - 5 wt.%, based on total weight of the lithiated-sulfonated block copolymer composition.

Membranes or Films Containing SSBC / Li-SSBC: Depending on the end-use applications, films or membranes can be formed containing SSBC or Li-SSBC copolymer. Films can be formed by known methods, e.g., casting, electrospinning, extrusion, compression, coating, such as dipping, flow coating, roll coating, bar coating, spray coating, curtain, rotogravure, brushing, wire wound rod coating, pan fed reverse roll coating, nip-fed coating, spraying, knife coating, spin coating, immersion coating, slot-die coating or ultrasonic spray coating. In embodiments, the film is a standalone film or supported on the substrate, e.g., glass, plastic, ceramic, porcelain, and the like.

In embodiments, a film is formed directly on the electrode of the energy storage device by known methods as described above. In the case of Lithium-ion battery, the film can be formed directly on cathode or anode. Examples include cathodes made with lithium- nickel-manganese-cobalt oxide ($LiNiMnCoO_2$), lithium-iron- phosphate ($LiFePO_4$), and anodes made with graphite, silicon-containing graphite, and lithium metal, etc.

In embodiments, a film is made by solvent casting. Examples of solvent include n-hexane, cyclohexane, methylene chloride, ethylene chlorides, isopropyl alcohol, acetone, N, N-dimethylacetamide, 1-methyl-2-pyrrolidinone, 1,3-dioxolane, 2-methoxy ethanol, dimethylformamide, benzyl alcohol, toluene, xylene, dimethyl sulfoxide, and mixtures thereof. The film is then dried from room temperature to 80 °C, or 30 - 70 °C, or 35 - 65 °C, with or without vacuum in a continuous or batch process.

In embodiments, the film (membrane) has a thickness of 0.1-50 μm, or 1-45 μm, or 5 - 40 μm, or 8 - 25 μm, or 10 - 30 μm, or 12 - 25 μm, or > 0.1 μm, or < 50 μm.

Cross-linking or Curing by Thermal / Radiation Treatment: Depending on the application, the article, e.g., film or membrane, etc., obtained from the composition containing the SSBC is cross-linked by any of neutralization, ionic complexation, or by curing using thermal or radiation treatments. Cross-linking can be achieved by heat, UV radiation, gamma radiation, electron-beam, or in microwave, in the presence or absence of a thermal or a photoinitiator.

In embodiments, the cross-linking or curing of the film in the presence of the thermal initiator is conducted at a temperature of 40 - 200°C, or 45 - 180°C, or 50 - 150°C, or 55 - 120°C, or 60 - 100°C, or > 45°C, or < 140°C, and for a period of 1 - 240 min., or 2 - 220 min., or 5 - 200 min., or 10- 150 min., or 15 - 100 min., or 20 - 60 min., or > 2 min., or < 60 min.

In embodiments, the cross-linking or curing of the film is performed by exposing the film to E-beam or gamma radiation having a dose of radiation from 10 - 250 kGy (kiloGray), or 20 - 220, or 30 - 200, or 40 - 180, or 50 - 160, or 60 - 150, > 20, or < 220 kGy. The E-beam processing can be effected with an electron accelerator, e.g., any of electrostatic direct-current (DC), electrodynamic DC, radiofrequency (RF) linear accelerators (LINACS), magnetic-induction LINACs, and continuous-wave (CW) machines.

In embodiments, the specimen, or the film before or after cross-linking or curing is treated with a solvent annealing step. The solvent annealing of the film can be achieved by placing the film in a closed chamber with the solvent reservoir for a period of 1 - 96 hrs., or 2 - 72 hrs., or 5 - 48 hrs., or 12 - 40 hrs., or > 10 hrs. In embodiments, the solvent is directly sprayed on the film for a period of 2 sec. - 1 min., or 5 sec. - 40 sec., or 10 sec. - 30 sec., or > 2 sec., to cover the film sample with the solvent. The solvent can be any polar solvent, e.g., water, hexafluoroisopropanol, trifluoroethanol, ethylene glycol, methanol, ethanol, acetic acid, benzyl alcohol, 2-propanol, and mixtures thereof.

In embodiments, the film has a thickness of 1 - 400 μm, or 2 - 200 μm, or 5 - 100 μm, or 10 - 50 μm, 0.1-50 μm, or 1-45 μm, or >0.1 μm, or < 40 μm.

In embodiments, the film is heat laminated, solvent laminated, or adhesive laminated onto a microporous support (a substrate) for use in the water purification system. Non-limiting examples of the microporous support substrate include polyester, polyethylene, polypropylene, polymethylpentene (PMP), polyethylene terephthalate, cellulose, cellulose nitrate, cellulose acetate, nylon, polytetrafluoroethylene, a fibrous woven or a non-woven material, and the like. Alternatively, the membrane can be supported onto commercially available membranes.

Properties of SSBC: Membranes or films comprising, consisting essentially of, or consisting of the SSBC are characterized as selectively permeable with ion exchange capacity (IEC) properties, ionic conductivity, and excellent liquid electrolyte uptake characteristics. The membrane / film also undergoes considerable swelling when it absorbs liquid electrolyte, e.g., at least 10-250%, or 25-250%, or > 10 % or 35-225%, or 50 -200 %, or 75-175%, or < 250% at ambient temperature, as measured by a weight gain measurement method.

In embodiments, the SSBC has an IEC of > 0.5 meq/g, or > 0.75 meq/g, or > 1 meq/g, or > 1.25 meq/g, or > 2.2 meq/g, or > 2.5 meq/g, or > 4.0 meq/g, or < 4.0 meq/g, or 1.5 - 3.5 meq/g, as measured by acid-base titration method. In embodiments, the lower ion exchange capacity membrane (1.0 meq/g) is considered more stable than the higher ion exchange capacity membranes (1.5 and 2.0 meq/g).

In embodiments, the SSBC has a glass transition temperature ($T_g$) of 90-200°C, or 90 - 180°C, or 95 - 180°C, or > 90°C, or >95 °C, or < 200°C, measured by Dynamic Mechanical Analysis (DMA), according to ASTM 4065.

In embodiments, the film composed of the SSBC is characterized to have sufficient thickness for fabricating nanostructured materials to use in a separator composition, e.g., a film for use in the porous separator or a composite has a thickness of at least 0.1 μm, or 0.25 μm, or 0.75 μm, or 1 μm, or < 1 μm, and the composite substrate has a thickness of 1-30 μm, or 3-25 μm , or 8-20 μm, or > 1 μm, or < 50 μm. In embodiments, a separator has a thickness of 1-150 μm, or 3 -100 μm, or 5-75 μm, or 8-65 μm.

The mechanical properties of a film (dry state) containing SSBC measured in accordance with the ASTM D412 standard are described below.

In embodiments, the film has a tensile strength of 5 - 30, or 5 - 18, or 7 - 15, or 7.5 - 14, or 8 - 12, or > 5, or < 15 MPa, and a tensile strength measured after 1 day (24 hrs.), of 3 - 10, or 3.5 - 8, or 4 - 7.5, or 4.5 - 7, or > 3.5, or < 8 MPa.

In embodiments, the film has a toughness of 3 - 25, or 3.2 - 22, or 3.5 - 20, or 3.8 - 18, or 4 - 15, or 4.2 - 12, or 4.5 - 10, or > 3.5, or < 15 $MJ/m^3$.

In embodiments, the film has a Young's modulus of 190 - 1100, or 175 - 1000, or 190 - 950, or 300 - 900, or 340 - 860, or 400 - 750, or > 100, or < 1100 MPa.

In embodiments, the film has a Modulus at 80°C of 150 - 850 Mpa, or 185 - 760 Mpa, or 240 - 700 Mpa, or 300 - 640 Mpa, or > 150 Mpa, or < 850 Mpa, measured by Dynamic Mechanical Analysis (DMA), according to ASTM 4065.

In embodiments, the film has a swellability in water, after 24 hrs. at room temp., of < 70%, or < 90%, or < 100%, or < 120%, or < 150%, or < 200%, or < 250%, or between 3-70%, or 5-100%, or 8-200%, or 40 - 300%, or 50 - 250%, or 60 - 220, or 70 - 200%, or 80 - 180%, or 100 - 160%, based on total initial weight of the film.

In embodiments, the film has a WVTR in an upright manner of 1000 - 30000, or 5000 - 28000, or 6000 - 25000, or 7000 - 22000, or 8000 - 20000, or 9000 - 18000, or > 3000, or < 25000 $g/m^2$/day. In embodiments, the film has a WVTR in an upside-down manner of 1000 - 150000, or 5000 - 140000, or 8000 - 120000, or 15000 - 100000, or 20000 - 80000, or > 15000, or < 125000 $g/m^2$/day. WVTR measurements are per ASTM E96 / E96M in an upright or upside-down manner at 50°C and at 10% of humidity.

In embodiments, the film has durability in accelerated aging of up to 30 days, or > 5 days, or > 7days, or > 14 days or < 30 days measured at 80°C in water.

In embodiments, a film containing the cross-linked SSBC has % KCl perm-selectivity (10:1 mol ratio) of >40%, or < 100%, or 40-100%, or 45-95%, or 55-90%, or 65-85% at room temperature.

Properties of the Li-SSBC : After neutralization with the introduction of Li+ ion, the membranes or films comprising, consisting essentially of, or consisting of Li-SSBC are characterized as selectively permeable with ion exchange capacity (IEC) properties, ionic conductivity (pure polymer and saturated with liquid electrolyte), liquid electrolyte uptake, electronic conductivity, thermal stability, Li-interfacial stability, lithium-ion transfer number and excellent liquid electrolyte uptake characteristics. The membrane / film also undergoes considerable swelling when it absorbs liquid electrolyte, e.g., at least 25-250%, or > 25 % or 35- 225%, or 50- 200 %, or 75-175%, or < 250% at ambient temperature as measured by a weight gain measurement method.

In embodiments, the film has an IEC of > 0.5 meq/g, or > 0.75 meq/g, or > 1 meq/g, or > 1.25 meq/g, or >1.5 meq/g, > 2.2 meq/g, or > 2.5 meq/g, or > 4.0 meq/g, or < 4.0 meq/g, or 1.0 - 6 meq/g, as measured by acid-base titration method.

In embodiments, the film has ionic conductivity (pure polymer) of > $10^{-9}$ S $cm^{-1}$, or 1.50 x $10^{-9}$ - 2.0 x $10^{-4}$, or 2.0 x $10^{-9}$ - 1.0 x $10^{-4}$, or 8.0 x $10^{-8}$ - 9.0 x $10^{-5}$, or 6.0 x $10^{-8}$ - 9.0 x $10^{-5}$ or 5.0 x $10^{-8}$ - 8.5 x $10^{-5}$, 2.5 x $10^{-6}$ - 1.0 x $10^{-3}$, or 5.0 x $10^{-6}$ - 1.5 x $10^{-3}$, or 1.0 x $10^{-5}$ - 2.0 x $10^{-3}$, or > 2.0 x $10^{-6}$, or > 4.0 x $10^{-6}$ S $cm^{-1}$ at 30 °C.

In embodiments, the film has ionic conductivity (polymer saturated with solvent) of > $10^{-9}$ S $cm^{-1}$, or 1.50 x $10^{-9}$ -

$2.0 \times 10^{-4}$, or $2.0 \times 10^{-9}$ - $1.0 \times 10^{-4}$, or $8.0 \times 10^{-8}$ - $9.0 \times 10^{-5}$, or $6.0 \times 10^{-8}$ - $9.0 \times 10^{-5}$ or $5.0 \times 10^{-8}$ - $8.5 \times 10^{-5}$, $2.5 \times 10^{-6}$ - $1.0 \times 10^{-3}$, or $5.0 \times 10^{-6}$ - $1.5 \times 10^{-3}$, or $1.0 \times 10^{-5}$ - $2.0 \times 10^{-3}$, or > $2.0 \times 10^{-6}$, or > $4.0 \times 10^{-6}$ S $cm^{-1}$ at 30 °C as measured by electrochemical impedance spectroscopy (EIS).

In embodiments, the film has a liquid electrolyte uptake of carbonate solvents (ethylene carbonate, dimethyl carbonates etc.) in the range of 25-250%, or > 25 %, or 35-225%, or 50- 200 %, or 75-175%, or < 250% at ambient temperature.

In embodiments, the film has a thermal stability, a weight loss of < 5%, or < 4%, or < 2.5 %, or < 1 % as measured according to thermogravimetric analysis (Ramp from 20°C to 200°C at a ramp rate of 10 °C/min; Isothermal TGA at 15°C for 8 hr.

In embodiments, the film has a Li-interfacial stability of < 10%, or < 8%, or < 6.5 %, or < 5%, or < 4%, or < 2% measured as per the lithium symmetrical cell-Electrochemical Impedance Spectroscopy over time and temperature after activation cycles (i.e., less than 10% change after 100 cycles at 25 °C and 60 °C).

In embodiments, the film has a lithium-ion transference number of > 0.4, or > 0.5, or >0.6, or > 0.8, or in the range of 0.4-1.0 according to Bruce-Vincent method using Li-symmetrical cell.

Applications: In embodiments, SSBC and Li-SSBC products are used as flakes, in solution or as pellets for the final application apart from using it as a film or a membrane.

In embodiments, the lithiated sulfonated block copolymer (Li-SSBC) is for use as components of energy storage devices, e.g., in any of current collectors, electrodes or separators (as binders). In embodiments, the lithiated-sulfonated block copolymer is coated or deposited onto a onto a substrate comprising polyolefin (porous separator). In other embodiments, the block copolymer layer is coated on at least one side of the separator. In yet other embodiments, both sides of the separator are coated with the same or different lithiated sulfonated styrenic block copolymer compositions.

Examples: The following examples are intended to be non-limiting.

The viscoelastic behavior is measured by DMA according to ASTM 4065.

Mechanical properties, including toughness, Young's modulus, tensile strength, and elongation at break, in the dry state are measured according to ASTM D412.

Water Vapor Transmission Rate (WVTR) measurements of samples are performed according to ASTM E96 / E96M.

The degree of sulfonation of samples is determined by potentiometric titration.

Ionic conductivity is measured by electrochemical impedance spectroscopy (EIS) with an impedance analyzer combined with potentiostat / galvanostat. A film sample of polyelectrolyte composition in a circular shape having a size of about 1.13 $cm^2$ is placed between two stainless steel solid blocking electrodes encapsulated by a Teflon holder. For temperature dependent ionic conductivity measurement, heat from 20 to 100°C is applied to stainless steel blocking electrodes by heating tape. Impedance spectra are collected for frequencies in the range of 1 MHz to 0.1 Hz with an AC (alternate current) perturbation of 10 mV at open circuit potential at a temperature range from 30 to 100°C. Films are held at each temperature for 1 hr. to reach equilibrium, followed by five measurements at equilibrium. The ionic conductivity is calculated by using equation: $\sigma = L/(AR)$, where L is the thickness of the film, A is the cross-sectional area of the blocking electrode (ca. 1.2161 $cm^2$), and R is the resistance of the film determined by the equivalent circuit regression of the Nyquist data.

Liquid electrolyte (LE) uptake of the polymer (SSBC/ Celgard) membrane or film is estimated by measuring the weight of membrane pieces soaked in the liquid electrolyte, using the formula:

$$\text{Uptake \%} = \frac{(w_t - w_o)}{w_o} \times 100$$

where $w_t$ and $w_o$ are the weights of soaked membranes with liquid electrolyte and dry pieces of porous membranes without liquid electrolyte, respectively.

Example 1 (SSBC-1 comparative): A sulfonated pentablock copolymer (SSBC-1) has a structure of poly[tert-butylstyrene-b-(ethylene-alt-propylene)-b-(styrene-co-styrene¬sulfonate)-b-(ethylene-alt-propylene)-tert-butylstyrenel (tBS-EP-sPS-EP-tBS). The tBS block has Mp of 15 kg/mol, the EP blocks each has $M_p$ of 10 kg/mol, and the interior sPS block has $M_p$ of 28 kg/mol. The SSBC-1 has an IEC of 2.0 mmol/g at 10.5 wt.% solids in apolar solvent mixture of 1:1 (cyclohexane / heptane), a molecular weight of 78 kg/mol, glass transition temperature of 86°C, and WVTR, upright (50 °C/10% RH) of 7.5 kg/m2/day.

Example 2 (SSBC-2): A sulfonated penta-block copolymer SSBC-2 has a structure of poly[para-methylstyrene-b-(ethylene-alt-propylene)-b-(styrene-co-styrene¬sulfonate)-b-(ethylene-alt-propylene)- para-methylstyrene] (pMS-EP-sPS-EP-pMS). The pMS block has $M_p$ of 15 kg/mol, the EP blocks each has $M_p$ of 7 kg/mol, and the interior sPS block has $M_p$ of 42 kg/mol. The SSBC-2 has an IEC of 2.0 mmol/g at 10.5 wt.% solids in apolar solvent mixture of 1:1 (cyclohexane /

heptane), a molecular weight of 86 kg/mol, glass transition temperature of 98°C, and WVTR, upright (50 °C/10 %RH) of 9.5 kg/m2/day.

Table 1 shows mechanical performance of Example 1 and 2 in dry state.

Table 1

| Examples | Toughness ($MJ/m^3$) | DMA Modulus at 80°C, MPa | Tensile strength (MPa) | Young's Modulus (MPa) |
|---|---|---|---|---|
| Ex. 1 (with SSBC-1) | 10 | 239 | 9 | 336 |
| Ex. 2 (with SSBC-2) | 17 | 704 | 15 | 702 |

Example 3: The SSBC-2 polymer (about 0.1 g) was dissolved in 50 ml of a toluene/methanol (90/10, v/v) solution. Nitrogen was bubbled through the solution for 30 minutes to purge the sample of dissolved CO2. The resultant polymer solution is then treated with an excess (about 10 mol%) of a concentrated aqueous solution of lithium hydroxide. The product sulfonate salt of SBC (Li-SSBC) was taken to prepare films as described in example 4.

Example 4: Films were prepared by first dissolving $SO_3LiSBC$ (Li-SSBC) of Example 3 in either pure tetrahydrofuran (SBC- x -THF) or an 85/15 v/v toluene/isopropyl alcohol mixture (SBC- x -TIPA) to produce 2 wt.% solution. Solvent dielectric constants ($\kappa$) were used to assess polarity differences among the casting solvents employed: $\kappa_{THF}$ = 7.43 and $\kappa_{TIPA}$ = 4.91. Films resulting from solution casting, followed by solvent evaporation, measured ≈20 μm thick and a substrate (composite) having 20 μm thickness with 0.5 μm $SO_3LiSBC$ coating. The films were used for further processing / testing.

Some of the films were cast in Teflon molds, covered to limit the rate of solvent evaporation, and left to dry for 48 hrs. Some of the resultant films were solvent-vapor annealed in THF for 24 hrs. and subsequently dried under vacuum for 24-48 hours at 60 °C. After drying, the membrane was immersed in an electrolyte solution for further characterization.

The ion conductivity results of the film after neutralization with 1M LiOH solution for 24 hr. is reported in Table 2 along with the electrolyte uptake results of the film sample upon soaking in electrolyte solution (1M LiPF6 in *EC/DEC v/v =1/1) at 25 °C various soaking time periods. As shown below, electrolyte uptake is dependent on the soaking time, and ion conductivity depends on electrolyte uptake. *EC/DEC refers to Ethylene Carbonate, Diethyl Carbonate, and v/v refers to volume ratio.

Table 2

| Samples | IEC | Soaking time | Electrolyte uptake (%) at 25°C | Li ion conductivity (mS/cm) | | | | | |
|---|---|---|---|---|---|---|---|---|---|
| | | | | at 25 °C | | at 60 °C | | at 80 °C | |
| | | | | 24 hrs. | 500 hrs. | 0 hr. | 500 hrs. | 0 hr. | 500 hrs. |
| Sample-1 | 2.0 | 60 min | 25.3 | 0.40 | - | - | - | - | - |
| Sample 2 | 2.0 | 75 min | 30 | 0.52 | - | - | - | - | - |
| Sample 3 | 2.0 | 720 min | 110 | 0.55 | - | - | - | - | - |

Although the terms "comprising" and "including" have been used herein to describe various aspects, the terms "consisting essentially of" and "consisting of" can be used in place of "comprising" and "including" to provide for more specific aspects of the disclosure and are also disclosed.

## Claims

**1.** A sulfonated styrenic block copolymer having a general configuration selected from the group consisting of: A-C-B-A, A-C-B-C-A, A-B-C-B-A, $(A-C-B)_nA$, $(A-B-C)_nA$, $(A-C-B)_nX$, $(A-B-C)_nX$ and mixtures thereof; wherein:

n ≥ 2;
X is a residue of a coupling agent;
each block A is a poly(para-alkyl styrene) block having a molecular weight from 1- 60 kg/mol;
each block B is a hydrogenated polyisoprene block (E/P) or a hydrogenated polybutadiene block (E/B), each

block B has a molecular weight of 1-10 kg/mol; and
each block C is a sulfonated polystyrene block, or a polymer block consisting essentially of sulfonated styrene units and unsubstituted styrene units according to formula (I):

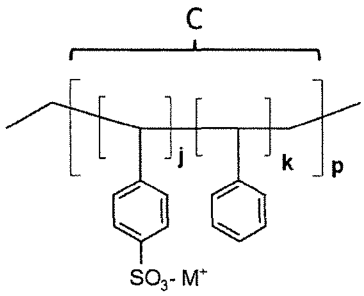

(I)

wherein p is ≥ 1, j ≥ 1 and k ≥ 0;

$M^+$ is selected from the group consisting of: $H^+$, $Na^+$, $K^+$, $Li^+$, $Cs^+$, $Ag^+$, $Hg^+$ and $Cu^+$; and
each block C has a molecular weight of 30 - 80 kg/mol;

wherein the sulfonated styrenic block copolymer has:

a total molecular weight of 65 - 115 kg/mol;
an ion exchange capacity of 0.5 - 3.5 meq/g; and
a glass transition temperature $T_g$ of 90 - 200°C, measured according to ASTM 4065.

**2.** The sulfonated styrenic block copolymer of claim 1, wherein, the sulfonated styrenic block copolymer is a pentablock having a configuration of A-B-C-B-A represented by a structure according to formula (II):

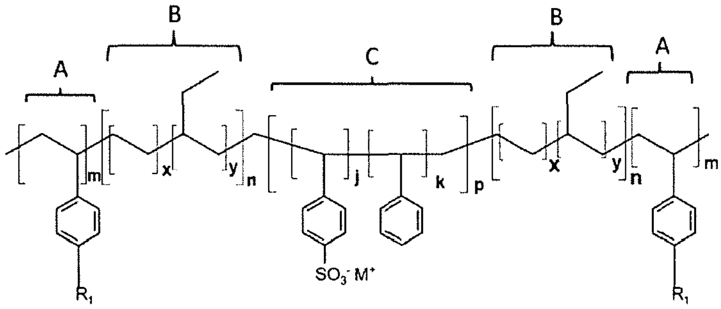

(II)

wherein each x, y, m, n, and p, independently, is ≥ 1; j ≥ 1 and k ≥ 0;

$M^+$ is $H^+$; and
each block A is an end block comprising polymerized para-methyl styrene monomer, wherein $R_1$ is $CH_3$;
each block B consists of ethylene and butylene or ethylene and propylene units; and
each block C consists of sulfonated styrene units and unsubstituted styrene units.

**3.** A film comprising the sulfonated styrenic block copolymer of claim 2, wherein the film is characterized as having at least one of the following properties:

a tensile stress of 6 - 20 MPa;
a toughness of 3 - 25 $MJ/m^3$;
a Young's modulus in dry state of 190 - 1100 MPa; all above measurements according to ASTM D412;
a DMA Modulus at 80°C of 150 - 850 MPa, according to ASTM 4065; and
a water vapor transmission rate in an upright manner of 5-20 $Kg/m^2$/day , measured at 50 °C/10% relative humidity.

4. The sulfonated styrenic block copolymer of claim 1, wherein the sulfonated styrenic block copolymer is a pentablock having a configuration of A-B-C-B-A represented by a structure according to formula (III):

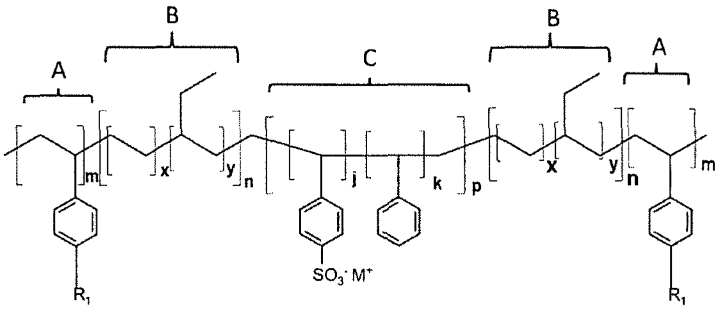

(III)

wherein each x, y, m, n, and p, independently, is ≥ 1; j ≥ 1 and k ≥ 0;
$M^+$ is $Li^+$; and
each block A is an end block comprising polymerized para-methyl styrene monomer, wherein $R_1$ is $CH_3$;
each block B consists of ethylene and butylene or ethylene and propylene units; and
each block C consists of sulfonated styrene units and unsubstituted styrene units.

5. A lithiated-sulfonated styrenic block copolymer formed by neutralizing the sulfonated styrenic block copolymer of claim 2 with 2-35 mol% of an aqueous solution of lithium hydroxide, wherein a membrane formed from the lithiated-sulfonated styrenic block copolymer has an ionic conductivity at 30 °C of > $10^{-3}$ S $cm^{-1}$ as measured by electrochemical impedance spectroscopy , and an electrolyte uptake at 60 °C of > 25 % as measured by a weight gain measurement method.

6. A film comprising the sulfonated styrenic block copolymer of any of claims 1-2 and 4.

7. The sulfonated styrenic block copolymer of any of claims 1, 2, and 4,
wherein a weight ratio of block A to block B in the sulfonated styrenic block copolymer ranges from 10:1 to 1:2.

8. The sulfonated styrenic block copolymer of any of claims 1, 2, and 4,
wherein the block C constitutes 40 - 65 wt. % of the sulfonated styrenic block copolymer.

9. The sulfonated styrenic block copolymer of claim 1, wherein the poly(para-alkylstyrene) is derived from a para-alkyl styrene monomer selected from the group consisting of: para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene), and mixtures thereof.

10. The sulfonated styrenic block copolymer of claim 1, wherein the block B is a hydrogenated polybutadiene block, wherein prior to hydrogenation, a polybutadiene block is derived from a conjugated diene monomer selected from the group consisting of: butadiene, 2,3-dimethyl-1,3-butadiene, 1-phenyl-1,3-butadiene, 1,3-pentadiene, 1,3-hexadiene, 3-butyl-1,3-octadiene, and mixtures thereof.

11. A solid polymer electrolyte for use in an energy storage device, wherein a electrolyte is formed by adding a sufficient amount of liquid electrolyte to the film of claim 6 for a sufficient amount of time for the film to swell at least 10% in volume,
and wherein the liquid electrolyte comprises a lithium salt dissolved in a solvent, the lithium salt is selected from the group consisting of LiPF6, LiBF4, LiClO4, LiTFSI, and mixtures thereof; and wherein the solvent is selected from the group consisting of: propylene carbonate, ethylene carbonate, diethyl carbonate, dimethyl carbonate, ethyl methyl carbonate, and mixtures thereof.

12. A separator for use in an energy storage device, wherein the separator is formed by applying the sulfonated styrenic block copolymer of claim 4 or the lithiated-sulfonated styrenic block copolymer of claim 5 onto a substrate comprising polyolefin, forming a coating;
wherein the polyolefin is selected from the group consisting of: modified polyolefins, polyethylene, polypropylene, polymethylpentene, and mixtures thereof; and wherein the substrate has a thickness ranging from 3 -100 μm.

**13.** The separator of claim 12, wherein the coating has a thickness of 0.1 - 25 μm.

**14.** An energy storage device comprising the separator of claim 12.

**15.** An energy storage device comprising the film of claim 3.

Europäisches Patentamt
European Patent Office
Office européen des brevets

# EUROPEAN SEARCH REPORT

Application Number
EP 24 19 8358

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/138146 A1 (KRATON POLYMERS US LLC [US]) 19 September 2013 (2013-09-19)<br>* page 54, line 25 - page 55, line 29 *<br>* page 13, line 29 *<br>* claims *<br>----- | 1,2,6-10 | INV.<br>C08F297/04<br>C08F8/44<br>C09D153/02<br>C08L53/02<br>H01M4/36<br>H01M10/052<br>H01M10/0565<br><br>ADD.<br>C08F212/12<br>C08F212/14<br>C08F12/30 |
| A | EP 4 223 840 A1 (KRATON POLYMERS NEDERLAND B V [NL]) 9 August 2023 (2023-08-09)<br>* paragraph [0103] *<br>----- | 1-15 | |
| | | | TECHNICAL FIELDS SEARCHED (IPC)<br>C08F<br>C09D<br>C08L<br>H01M |

The present search report has been drawn up for all claims

1

| Place of search | Date of completion of the search | Examiner |
|---|---|---|
| Munich | 23 January 2025 | Friebe, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 19 8358

This annex lists the patent family members relating to the patent documents cited in the above-mentioned European search report. The members are as contained in the European Patent Office EDP file on
The European Patent Office is in no way liable for these particulars which are merely given for the purpose of information.

23-01-2025

| Patent document cited in search report | Publication date | Patent family member(s) | Publication date |
|---|---|---|---|
| WO 2013138146 A1 | 19-09-2013 | CN 104220152 A | 17-12-2014 |
| | | EP 2825298 A1 | 21-01-2015 |
| | | JP 6022669 B2 | 09-11-2016 |
| | | JP 2015510026 A | 02-04-2015 |
| | | KR 20140143797 A | 17-12-2014 |
| | | RU 2014141504 A | 10-05-2016 |
| | | TW 201341458 A | 16-10-2013 |
| | | US 2013240438 A1 | 19-09-2013 |
| | | WO 2013138146 A1 | 19-09-2013 |
| EP 4223840 A1 | 09-08-2023 | CN 116535801 A | 04-08-2023 |
| | | EP 4223840 A1 | 09-08-2023 |
| | | US 2023242698 A1 | 03-08-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Determination of the ion exchange capacity of anion-selective membrane. *International Journal of Hydrogen Energy*, 26 March 2014, vol. 39 (10), 5054-5062